# EUROPEAN PATENT APPLICATION

(11) **EP 1 128 289 A2**
(43) Date of publication of application: **29.08.2001**
(21) Application number: 01301645.6
(22) Date of filing: 23.02.2001
(51) Int. Cl.: G06F 17/30

(54) **Data cross-referencing method**

(30) Priority: 25.02.2000 GB 0004578
(71) Applicant: Xrefer.Com Limited, London W2 1FT (GB)
(72) Inventor: Hodgkin, Adam George, Oxford OX4 4AA (GB); Roach, Carl David, Headington, Oxford OX3 9JN (GB)
(74) Representative: Perkins, Sarah

(57) **Abstract**

A cross-referencing method and system for use with a collection of reference sources provides a method and a means for the identification of cross-references between elements in the same reference source and the identification of additional cross-references on the basis of appearances of related elements contained in one or more other reference sources. The cross-referencing method and system provides a data retrieval tool that is multi-directional and for which the boundaries between individual references sources is transparent.

## Description

The present invention relates to a data cross-referencing method and to software for implementing said method. The present invention is particularly, but not exclusively, concerned with automated methods of retrieving information contained in reference books.

Reference books such as dictionaries or encyclopaedia are composed of a definite number of individual entries or articles with each entry comprising a headword and a body of text providing information or a definition of the headword. A single volume reference work may contain between 1000 and 100,000 entries. Most commonly the headwords are listed alphabetically and the reference book is used by looking up the desired headword. The information in the body of text associated with that headword may lead to further research by looking up other entries (cross-references) appearing in the body of the text associated with the desired headword.

References as they appear in published books, periodicals and articles are either external or internal references. An external reference (or 'citation') refers to another book or other publication whereas an internal reference or cross-reference refers to a page or part of the same publication by means of a page/paragraph number, or to the entry by means of the headword of the entry.

Increasingly dictionaries and encyclopaedia are being made available electronically. Instead of a physical reference book, the data contained within the reference book can be provided, for example, on a CD that can be run using a conventional pc. Also, reference books are becoming available on the World Wide Web ("the Web") and can be accessed using the internet. Usually, these electronic reference books are accessed using one of the many available search engines. For example, an entry in an electronic reference book is accessed by entering the desired keyword and then initiating a search to locate the keyword in the virtual reference book either as a headword or as it occurs in the body of an entry. Sometimes, the information is retrieved by means of an alphabetical key in which case the user selects the first letter of the desired headword from an alphabetical list, e.g. **a** from the list **a,b,c,d,e,**... From there the alphabetical listing continues with subsequent letters of the desired headword, for example **anni...,** and finally to **anniversary.** This method more nearly emulates the way a physical book is thumbed, but it is not generally an efficient arrangement for an electronic publication. It is often the case that several reference books are placed under a common search engine so that the user can search all of the reference books at once for instances of the desired headword. Where the contents of a plurality of electronic reference books is being searched for a desired word, the search engine is restricted to providing a series of hyperlinks to individual entries in each of the electronic reference books for that word. Once one of the hyperlinks has been selected and the body of text for the selected entry is displayed, the body of the text associated with that entry is limited to the reference book in which the selected entry appears.

Reference books are designed to be browsed and cross-referencing is a mechanism of retrieving information as the compiler of a particular reference book intended the book to be used. For an electronic reference book any cross-references appearing in the body of text associated with a desired headword are usually rendered explicitly in the form of automated links to corresponding headword entries in the same reference book. Where electronic reference books are available on the Web, the cross-references may relate to other headword entries within the same reference book, as described above, or the references (citations) may relate to a different publication that may or may not be accessible on the Web.

In all cases whether the reference book be in physical form or in electronic form, the flow of information identified in a search is in a single direction. A desired headword is found that may have one or more cross-references in the associated body of text specific to that reference book that are either references to further entries in the same reference book or to another reference book. One of the cross-references may be considered of interest in which case the headword corresponding to that cross-reference in the same reference book or the headword in the alternative reference book is then accessed and the cross-references specific to this new headword entry and specific to the reference book are studied. The information flow starts from a search term and then proceeds in a single direction to an instance of the search term appearing as a headword and from there to any cross-references which are mentioned in the entry and which are wholly determined by the compiler of that particular reference work.

The present invention seeks to provide a more powerful information retrieval tool for use with electronic reference publications and other cross-referenced databases and is particularly suited for use together with a text search engine in combination with a plurality of separate reference publications. As a text search engine can enable text searching across a collection of sources, so the present invention enables a network of cross-references to be generated across a collection of sources.

The invention uses the internal cross-reference structure of members of a collection of sources to generate an enriched network of extended cross-references. These extended cross-references can provide a basis for 'data mining' the collection of sources. In particular, the present invention seeks to provide a retrieval tool that is multi-directional in identifying potentially relevant cross-references and for which the boundaries of the individual reference publications are transparent. The information flow runs through a network of multiple and potentially overlapping cross-reference paths and the extended cross-references are not dependent upon the compiler of a single reference work.

The present invention provides a cross-referencing method applied to a collection of separate reference sources including a first reference source containing cross-references for items in the first reference source wherein one or more existing cross-references for an item in the first reference source are identified and, based on the existing cross-references, a list of new cross-references for the item to one or more of the separate reference sources is generated that is characteristic of the collection of references sources.

Preferably, the method comprises the steps of: identifying for each item in the first reference source elements associated with the item that are already cross-referenced; identifying items in the one or more further reference sources corresponding to the identified cross-referenced elements; and generating new cross-references for the items in the first reference source to items identified in the further reference sources.

Ideally, the existing cross-references of each of the items of each of the reference sources are identified and new cross-references generated. Furthermore, identical items in different reference sources may be co-referenced with each one of the items in the plurality of reference sources being allocated a source tag indicative of the reference source and the contents of all of the reference sources being collated with all identical items having different source tags co-referenced.

In a preferred embodiment the new cross-references are stored for future retrieval.

In a second aspect the present invention provides a cross-referencing method applied to a collection of separate reference sources including a first reference source containing a plurality of reference items wherein the content of a second reference source is analysed to identify appearances in the content of the second reference source of any one of the reference items of the first reference source and where one or more appearances are identified, a link between the appearance of the reference item in the second reference source and the reference item in the first reference source is recorded.

Preferably, where the reference item appears in one or more further reference sources, a link between the appearance of the reference item in the second reference source and the reference item in the one or more further reference sources is recorded.

In a separate aspect the present invention provides a reference method for locating relevant information from a collection of reference sources, the method comprising the steps of addressing a database containing information from a plurality of reference sources; requesting a list of entries from the plurality of reference sources for an item; selecting one of the entries provided and for the selected entry retrieving a list of new cross-references generated by the method as describe above.

Preferably, the reference method further includes the step of selecting one of the retrieved new cross-references as a new selected entry and retrieving a list of new cross-references generated by the method as described above for the new selected entry.

In a further aspect the present invention provides a data carrier on which is recorded software for generating cross-references for a collection of reference sources wherein the software includes instructions to identify for an item of a first reference source one or more existing cross-references and to generate a list of new cross-references for the item to one or more further reference sources that is characteristic of the collection of references sources.

Ideally, the software includes instructions to identify for each item in the first reference source elements associated with the item that are already cross-referenced; to identify items in the one or more further reference sources corresponding to the identified cross-referenced elements and to generate new cross-references for the item in the first reference source to items identified in the further reference sources.

An embodiment of the present invention will now be described by way of example with reference to the accompanying drawings, in which:
Figure 1 is a schematic diagram of an internet/intranet working environment;
Figure 2 depicts a flow chart of the method steps for retrieving a plurality of cross-references from an existing database in accordance with the present invention;
Figure 3a depicts a degree of partial overlap in the headwords used by two separate reference sources;
Figure 3b illustrates the extended references which can be derived from entries in two separate books with different cross-references, for entries on 'Giacometti';
Figures 4a, 4b and 4c are examples of the screens displayed during a search procedure employing the extended cross-references of the present invention;
Figure 5 is a schematic illustration of the functional components of an automated system for generating extended cross-references in accordance with the present invention; and
Figures 6a, 6b, 6c, 6d and 6e illustrate relational tables used in the recordal of links between data in the same reference source and between references sources.

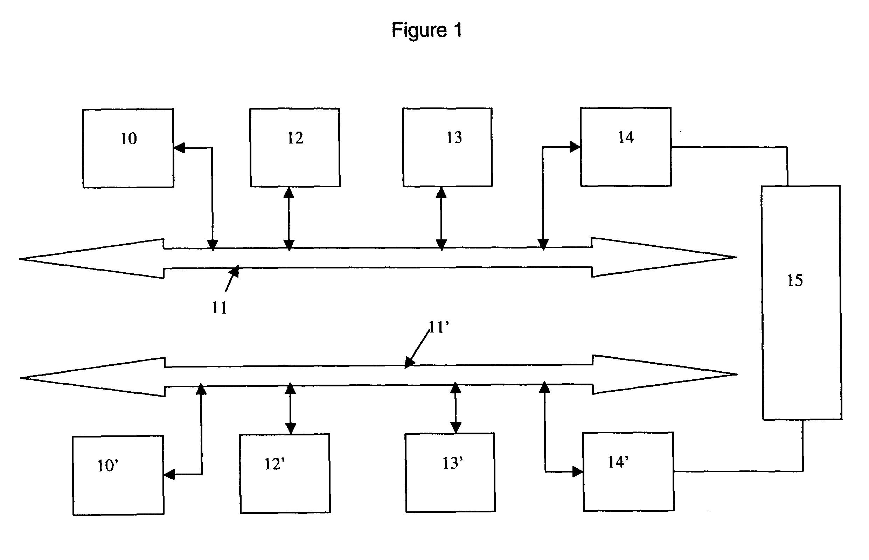

A hardware configuration for implementing the data cross-referencing software is depicted in Figure 1 and generally consists of two similar computing systems, a first computing system for the data resource and a second computing system for the user or client. Each common component of the computing systems is identified by like reference numerals but with the reference numerals for components of the client system being primed. Each computing system consists of one or more processors 10,10' that are in communication with one or more peripheral devices by means of a bus 11,11'. The peripheral devices include memory resources 12,12' that store computer coding and instructions and in the case of the first computing system the reference data. Additional peripheral devices include input and output interface devices 13,13' such as a keyboard, pointing devices such as a mouse or touch-pad, a monitor and a printer. It will be understood that this list of input/output interface devices is not to be considered to be comprehensive. The processors 10,10' are also in communication with a network interface 14,14'. The first computing system which is the remote data resource system requires substantial processing and memory capacity and is most likely to be implemented in a high-end work station or mainframe. The second computing system which is the client system requires less processing and memory capacity and so in the majority of cases the client system will be implemented in a conventional personal computer.

The remote data resource system and the client system communicate by means of a network connection 15 via the respective network interfaces 14,14'. The network connection 15 may be in the form of an independent service provider providing communication over the internet or a dedicated intranet connection, for example. The means of communication in the majority of cases will be via a telephone network although for intranet connections alternative means of communication may be implemented such as dedicated fixed data network.

As with conventional reference publications, the reference data of each reference source stored in the memory 12 of the remote data resource system consists of a plurality of articles each consisting of a searchable headword and a body associated with the headword. A headword may be associated with an image or other multimedia and/or text. The body for each headword may contain one or more cross-references to other headwords appearing in the same reference source. In the embodiment described herein the reference data consists of a collection of reference publications including, for example The Oxford Dictionary of Art, The Macmillan Encyclopedia 2001 and The Bloomsbury Guide to Art. In the memory 12 a local identifier or source tag can be assigned to headwords identifying the reference source from which the headword entry originates. This provides an easy point-of-reference for the article's original and subsequent editors.

The cross-references for each headword to be found in any one of the reference sources include any conventional cross-references for elements or terms that appear in the body associated with the headword. The cross-references also include extended cross-references that are a set of cross-references not to be found in any conventional physical or electronic reference book. The extended cross-references are based on a headword to an individual article and/or on one or more elements or terms in the body associated with a headword for which conventional cross-references may already be provided. The extended cross-references provide links to all headword entries, for the same terms, that appear in any of the reference publications. Unlike conventional reference works these extended cross-references were not envisaged by any of the compilers of the original reference works and instead are cross-references that can be automatically generated by the system described herein. Thus in the body of text associated with the headword "Giacometti" appearing in The Macmillan Encyclopedia 2001 conventional cross-references are provided to the headwords "cubism" and "surrealism" also to be found in The Macmillan Encyclopaedia 2001. With the data cross-referencing method of the present invention extended cross-references to "Giacometti", "cubism" and "surrealism" in The Oxford Dictionary of Art and separately in The Bloomsbury Guide to Art are also provided. The conventional cross-references and the extended cross-references are preferably identified during the initial development of the database or retrieval system and stored separately in the memory 12. Alternatively, the cross-references can be generated during operation of the database or retrieval system. The cross-referencing method relies on the fact that a collection of reference works will have a degree of overlap in their subject matter and the method of generating the new extended cross-references uses the conventional internal cross-references within each work (relevant to each individual work, in the opinion of the compiler of that reference work and thus a characteristic of that reference work) as the basis for automated production of extended cross-references which thus become characteristic of the particular collection of reference sources involved.

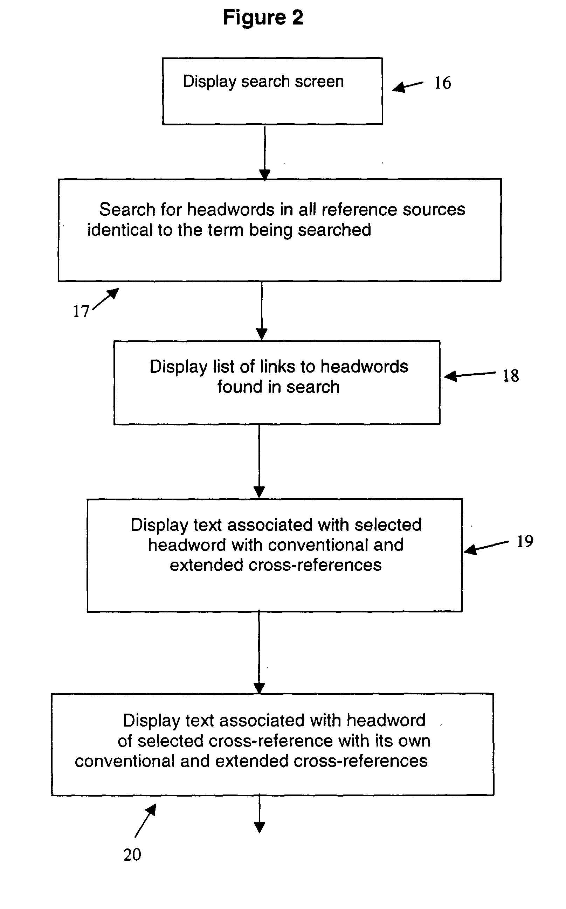

To retrieve information, the client accesses and runs the search engine stored in the memory 12 of the remote data resource system. Via the network connection 15 a search screen is displayed 16 (Figure 2) which prompts the user to input the term they wish searched. The term is input using the input interface 13' and the search engine is instructed to perform the search usually by pressing carriage return on the user's keyboard or by clicking using a mouse, for example, on a "search" button displayed on the user's monitor. The search engine searches 17 through the reference data stored in the memory 12 and identifies all headword entries for the term being searched along with the source tags for each of the headwords indicating from which reference resource of the collection the headword originates along with any headwords that have the term being searched as a keyword for example in its abstract. A list of the relevant headwords with in each case their source is supplied over the network connection 15 to the client system and is displayed 18 on the user's monitor as a list of links.

The user is free to select any of the links listed and selects one by clicking on the link using a mouse, for example. The selection is communicated to the remote data resource system that replies by communicating the text associated with the selected headword to the client system for displaying 19 on the user's monitor. At the same time a new list of links is communicated by the remote data resource system to the user. The new list consists of links to cross-referenced terms identified in the text. The list further includes extended cross-reference links to alternative headword entries, for the same cross-referenced terms, available in other reference resources. The conventional cross-references and the extended cross-references for each headword may be predetermined and stored with the text associated with that headword. Alternatively, the remote data resource system may identify the extended cross-references by retrieving data once a link has been selected. The data retrieval uses each of the conventional cross-references identified in the text and locates any other headword entries for the same words and their respective cross-references in the reference sources.

This procedure can be repeated as often as desired 20 with, in each case, selection of a link producing the headword and body of an article associated with the selected link, details on conventional cross-references plus a list of extended cross-references including other appearances of the cross-referenced terms in other reference sources.

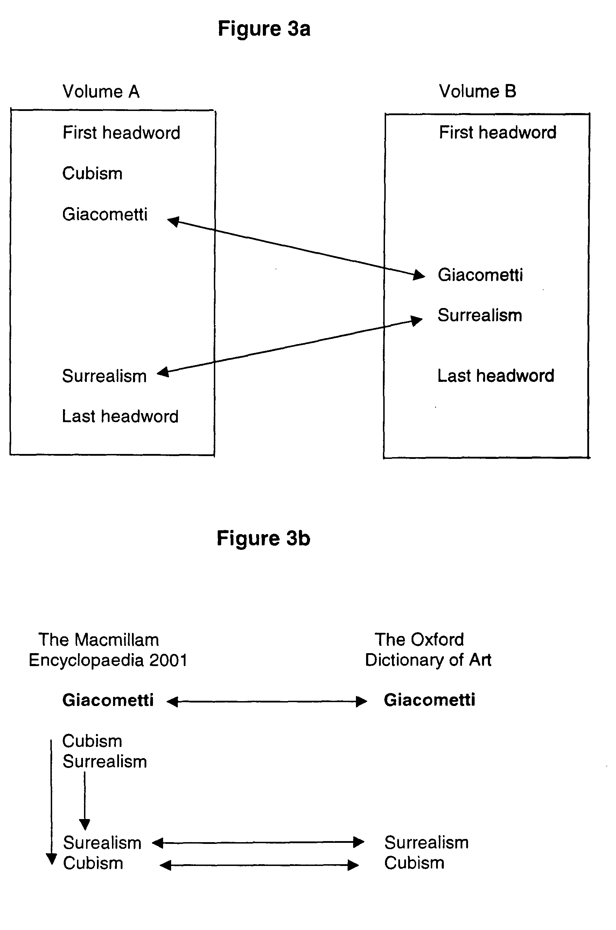

In Figure 3a two reference sources A and B are identified. In Volume A the terms "cubism", "Giacometti" and "surrealism" all appear as headwords. In Volume B on the other hand, the term "cubism" is not present whilst the terms "Giacometti" and "surrealism" appear at different positions. In contrast to a conventional reference source in which the cross-references flow vertically, with the cross-referencing method described herein extended cross-references flow horizontally. This is further exemplified in Figure 3b where the flow of cross-referenced links is depicted.

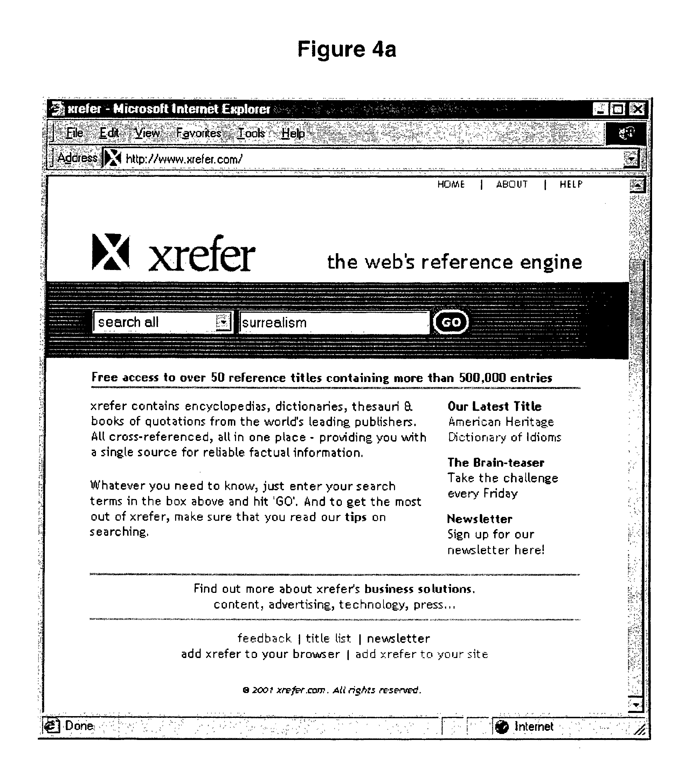

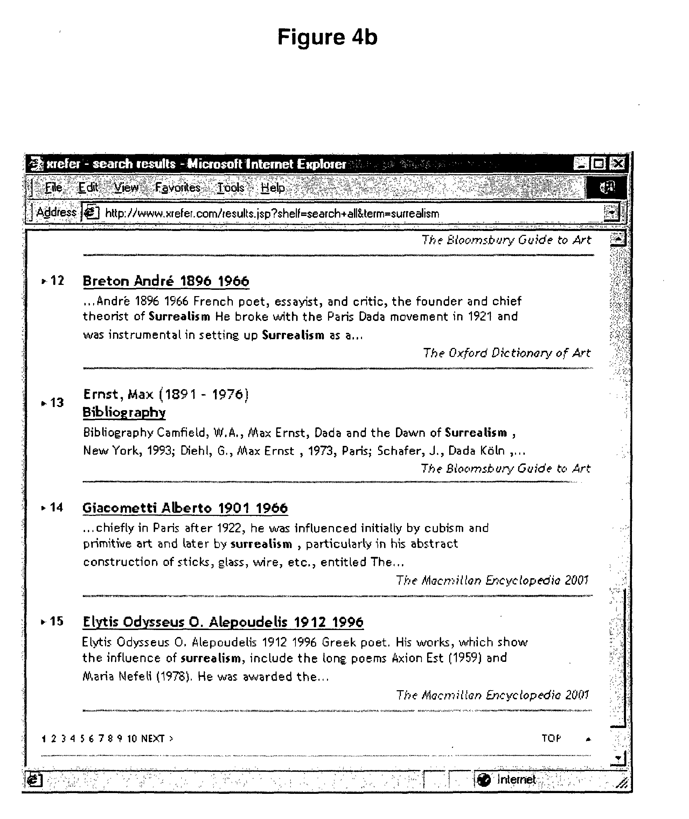

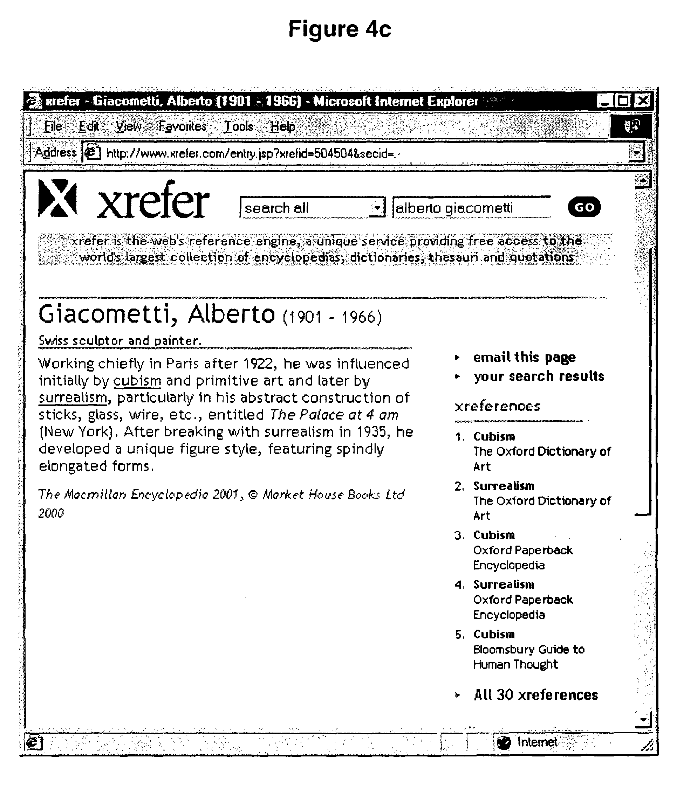

An example of the operation of the search engine in practice is shown in Figures 4a to 4c. A search screen is shown in Figure 4a with a window in which the term to be search is entered, in this case the term is "surrealism". In Figure 4b the results of the search are shown in the form of a list of links. The first links are all to "surrealism" as a headword in various reference sources, the later links are to different headwords that include "surrealism" as a keyword in the text accompanying the headword. Thus, in Figure 4b the fourteenth link in the list is to the headword "Giacometti" in The Macmillan Encyclopedia 2001 which includes the word "surrealism" in the abstract to the headword. Assuming now that the fourteenth link in the list to the Giacometti entry is selected, in Figure 4c the text associated with this selected headword is shown along with a list of links to the selected headword's extended cross-references. Hence, the text accompanying the headword Giacometti has conventional cross-references and automated links to "cubism" and surrealism" appearing in the body of the text. In addition, listed separately too the right of the text, are extended cross-references in order of reference source. The first reference source being The Oxford Dictionary of Art that includes headword entries for the terms cubism and surrealism. A second set of headword entries are also listed for The Oxford Paperback Encyclopedia. Each of the links displayed can be selected and the whole procedure repeated. Figure 3b shows the conventional cross-references and extended cross-references for "Giacometti" in both The Macmillan Encyclopedia 2001 and The Oxford Dictionary of Art. The entry for "Giacometti" in The Oxford Dictionary of Art has no conventional cross-references to cubism but the entry in The Macmillan Encyclopedia 2001 has cross-references to "surrealism" and "cubism". Using the method for generating extended cross-references, a user is able to move from "Giacometti" in The Macmillan Encyclopedia to "cubism" in The Oxford Dictionary of Art.

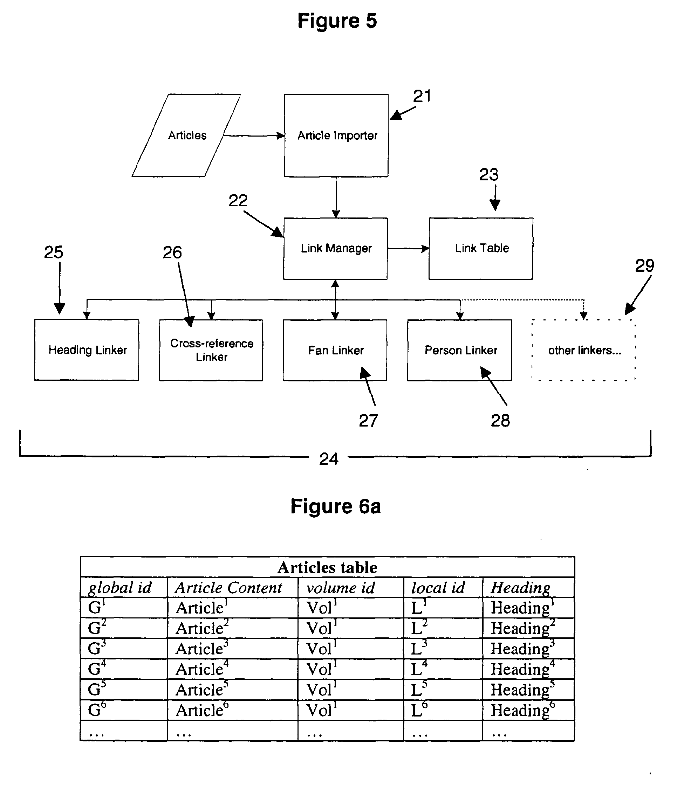

The generation of extended cross-references is performed by three sets of components: an article importer 21, a link manager 22, one or more relational tables that will be referred to as the links table 23 and a series of linkers 24. These components work together to ensure that the extended cross-references in a plurality of sources are more reliable, more precise and more validated than the cross-references in any single source or any subset of the collection. Figure 5 illustrates how these various components are organised and the manner in which they work together to generate and manage extended cross-references is described in detail below.

The article importer 21 is in communication with an input interface of the remote data resource system and receives articles, each consisting of a headword and a body, which are imported into an articles table by the article importer 21. The articles table is illustrated in Figure 6a. It stores the heading (headword) and the article content (body) in separate cells of the table but linked through a global identification tag, usually a number, that is assigned to each article which is unique to that article across the entire database. The heading and the article content are also linked to a volume identification tag which identifies the reference source from which the article comes and a local identification tag which, when present, identifies existing groupings of articles within a reference source.

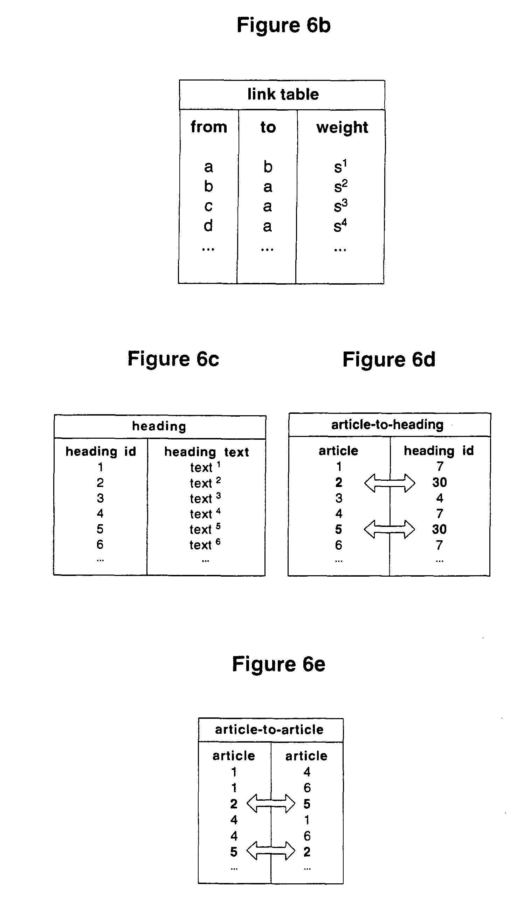

Cross references for individual articles are stored in the links table 23 and, as illustrated in Figure 6b, the cross-reference is recorded as a link between two different global identification tags to which a weighting, which will be described in greater detail below, is assigned. Thus, the cross-reference from global id a to global id **b** is assigned a weighting s¹ whereas the cross-reference from global id **b** to global id a is assigned a weighting s².

Cross-references are identified by one or more different linkers 24, each of which creates cross-references, including extended cross-references, based on a particular characteristic of the article data. The link manager 22 collates the cross-references identified by each of the linkers and manages the links table 23. A standard interface is used between the link manager 22 and each of the linkers 24 so that additional linkers 29 can be plugged into enable new cross-referencing strategies to be implemented. The output from each linker is totalled and normalised by the link manager 22 and then used to update the links table 23. Each linker may separately store cross-references it has identified along with the weightings the linker assigned to each cross-reference. This enables the link manager 22 to use the output of the linker again without necessitating the linker to reprocess the article data.

The following is list of possible linkers that may be implemented in a cross-referencing system. The list is not intended to be comprehensive nor is it intended that the linkers identified below are to be considered essential to the operation of all such cross-referencing systems. The linkers illustrated in Figure 5 comprise: a heading linker 25, a cross-reference linker 26, a fan linker 27 and a person linker 28.

The heading linker 25 links articles between different reference sources that share the same heading. The heading linker 25 maintains a heading table, illustrated in Figure 6c, which contains a list of all unique article headings, each with a unique identification tag. This heading table is used to build an article-to-heading table, illustrated in Figure 6d, that records which articles, identified by their unique global identification tag, have a headword that matches a heading. From this the heading linker constructs an article-to-article table, illustrated in Figure 6e, that records which articles are related by having matched headings. Thus, with reference to figures 6d and 6e, articles having ids **2** and **5** have the same heading, id **30**. This enables two cross-references to be generated in the article-to-article table: one from article id **2** to article id **5** and one from article id **5** to article id **2**.

The cross-reference linker 26 parses the content of each article to identify all cross-references already present in the article. As illustrated below, when a cross-reference is found (**A**), the cross-reference linker 26 converts the local identification tag (**B**) into a global identification tag and records the resulting link with a weight value. A link is also recorded for the link from the cross-referenced article *back* to the article that was being parsed. A lower weight value is assigned to such reverse links. The following 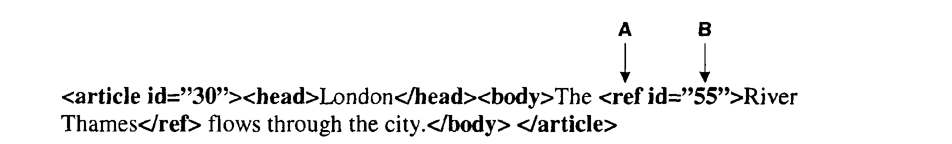 Thus, the cross-reference linker 26 identifies and records links between articles that are already explicitly associated with a cross-reference. These cross-references are defined by the author of the relevant reference source before submission to the extended cross-reference process.

The fan linker 27, on the other hand, links an article to any other articles that have the same heading as those articles it cross-references. This is done by firstly parsing the content of a first article (**P**) for existing cross-references and converting the local identification tags for any cross-references that are found to global identification tags (similar to the process performed by the cross-reference linker). The cross-reference may refer to a second article (**Q**). The fan linker 27 then compares the heading of this second article with those in the heading table produced by the heading linker 25. For each match found, a link from the first article (**P**) to the matched articles (**R**) is recorded in the article-to-article table of Figure 6e. Links are also generated from each of the matched articles (**R**) *back to* the first article (**P**) but with a lower weighting value. The conventional cross-references in an article are thus made explicit and used to identify new, extended cross-references to the same relevant headings in other reference sources. As the extended cross-references are determined from all of the reference sources, the extended cross-references are a property of the entire collection of reference sources rather than an individual reference source as is the case with conventional cross-references.

The person linker 28 is similar in operation to the heading linker 25 but operates with people's names rather than headings. The person linker 28 parses the content of articles to locate people's names appearing in the content. A person table is maintained by the person linker in which information about each name is recorded such information may comprise a surname, a forename, title and places and dates of birth and is linked to individual articles where that person appears in the content of the article. This information is then used to generate additional links in the article-to-article table where two articles both contain reference to the same person.

This process is complicated by the fact that two different people can have the same name and by the fact that the manner in which people are referred to can differ between articles. Two references to the same person are identified as a match if they share the same surname, year of birth and at least one matching forename. If both have year of deaths, which differ, then the match is rejected. This process of progressive validation and precisification ensures that the web of extended references becomes more valuable and richer, both in breadth of coverage and also in providing greater detail and enriched meaning. By further parsing of the text of the sources it is possible to add more person-related details (the places of birth and death, the literary works authored, the dates of significant events etc).

A similar process can be performed with respect to geographical locations and with events. In the case of geographical locations weighting values are varied depending upon the specificity of the information contained in the article. For example reference to "Paris, France" would be matched to "Paris" but with a low weight but a match with "Paris, Texas" would be rejected. In the case of events, only an exact match between references to an event in two separate articles should result in the creation of a link.

As mentioned earlier, each cross-reference and extended cross-reference is assigned a weighting that infers the importance of a specific relationship between two articles (e.g. same headings, same people quoted etc.). Weighting values are preferably measured on a scale of 1 to 100 with 1 representing a match at a pure character-matching level and 100 representing a strong match at the semantic level. Each of the linkers individually sets a weighing value in the range 1-100 for each link identified by the linker. The link manger 22 then totals the weighting values from each of the linkers for the same article-to-article link and normalises the total. Where an article-to-article link is for two articles from the same reference source, the weighting value is adjusted to reflect this.

The details of the linking and weighting schema described above are simply examples of one particular implementation strategy. It will be appreciated that alternative approaches for the generation of cross-references and extended cross-references are envisaged which still provides a multi-directional data retrieval tool in accordance with the present invention.

The components and method steps described above are preferably implemented in software and may be stored on a data carrier such as a CD or other magnetic storage media either as part of or separable from a computer or the software may exist as a signal on a communication system.

Although reference has been made to the weighting of links between articles, the links may be collated in many different ways. For example, the links may be collated simply by reference source. However, alternative collations that, for example, take account of the popularity of individual terms may be employed.

New reference sources can be added to an existing database containing extended cross-references. For each new volume added to the database collection each article is assigned a global identification tag and is analysed by the linkers to explicitly realise internal existing cross-references as well as to generate links with articles in the existing database.

The method for compiling extended cross-references is automatically reversible. The extended references derived from any reference source may be removed when the reference source is removed from the collection by identifying and removing all headwords and cross-references having the relevant source tag. Alternatively, the extended cross-references can simply be re-built omitting the removed reference source. It follows that any combination or subset of the sources in a collection of reference sources may be automatically constructed. Through this method customisable and personalised selections of material can be produced, say for an individual commercial customer or a personal user who only wishes to use specified reference sources. This aspect of the invention will be important in the case where one may wish to deliver individualised views taken from a comprehensive set of data. One use for this would be to give the user the opportunity to see a collection of reference material in a single language or a pair of languages (say French or/and Japanese) although the total system may provide access to reference material in many more languages.

A further improvement of the entire reference database that can be provided by the compiler of the reference database manually is through the identification of co-referential headwords in different reference sources. For example, entries in the same reference source to LINCOLN (Abraham LINCOLN, LINCOLN car brand, LINCOLN a city in England) in most cases will not be co-referential, but the equivalent entries in each of the reference sources to Abraham LINCOLN, for example, may be considered co-referential. Headwords which are not identical in spelling and which would not be recognised as identical by a search engine, may be judged co-referential by the compiler. Similarly, headwords that are spelt the same, but have different meanings, may be judged not to be co-referential. The compiler may also identify more complex relationships. For example, if one of the reference sources is a rhyming dictionary, the entry for LINCOLN in the rhyming dictionary would be deemed co-referential with all entries of LINCOLN in other reference sources, irrespective of subject. This improvement to the basic method of generating the extended cross-references through the manual selection of co-referential headwords, which may not be identical to a selection of co-referential headwords generated by a search engine, has application in generating collections of reference materials in different languages; so 'Parigi' and 'Paris', and 'logiciel' and 'software' may be judged to be co-referential. This enables a superset of headwords to be created that is shorter than the concatenation of the headwords of all of the different reference sources. It is envisaged that this improvement to the basic cross-referencing method may also be automated so that co-referential entries can be identified at the same time that the extended cross-references are generated.

Identification of co-referential headwords also enables further analysis of the reference sources themselves. Two very similar reference sources are likely to have very similar cross-references and the degree to which the headwords and the cross-references are the same is a good measure of similarity. However, this aspect is of more use in identifying reference resources that differ greatly from other reference resources. It occasionally happens that in searching for information on a topic the search doubles back on itself and the search is frustrated. By identifying those reference sources that differ markedly from other available reference sources, a user is provided with the information to break free from a search that has become circular and to identify different cross-references and a different line of research by purposely selecting extended cross-references from the reference source that is identified as being different.

The method of building extended cross-references, which is the subject of the present invention, does not lead to an unmanageable explosion of data; the rate at which extended cross-references accumulate will be a function of the degree of overlap of the different works but it is a broadly linear function (a collection of 100s of reference works may have several million cross-references and perhaps a few thousand million extended cross-references.) It will not escape the notice of one skilled in the art that a progressively larger collection of extended cross-references will provide a progressively more useful index or measure of the extent to which any two entries in a collection of reference works are similar to each other. The method of building extended cross-references therefore provides a useful framework for making user-customisable search tools.

It will of course be appreciated that new reference sources can be added to the reference database by repeating the methods described above with respect to the articles of the new reference work. Also, a sub-set of the reference sources can be extracted from the collection and customised as necessary. For example, all musical reference works could be extracted and extended cross-references generated for only this subject matter sub-set. Further it may be desirable to enhance the internal cross-references in one source by taking a richer set of cross-references from another similar work and automatically searching for terms which are mentioned in the first title but not expressly referenced. So it might be desirable to use all the 'authors' which appear as separate entries in the Oxford Companion to English Literature and use these as search terms to locate potential extended cross-references in the Macmillan Compact Encyclopaedia and similar works of general reference. This technique of enriching references in a work may be particularly valuable in producing customised versions of any collection for individual users. Hence. 'book titles' might be used as extended cross-references in a collection of sources which is concerned with literature; or if one desired to enhance a collection of reference material for the use of a travel agent the extended cross-references might be used to find data on 'countries', 'mountains', 'parks' or generally 'place names' or other entities which are used in the context of travel. Such improvements to the reference data may be performed automatically or manually by the compiler.

Furthermore, it is envisaged that for texts that cannot automatically be divided into a collection of individual articles, a complier may manually assign headings to different sections of the text thereby enabling it to be analysed and linked to a collection of reference sources as described above.

Although reference has been made herein specifically to dictionary references, it should be apparent that the method and system may be implemented for any document that is divided or is capable of being divided into a plurality of articles. In particular, it is envisaged that the method and system described above may be used to generate robust cross-references and extended references between reference material such as text books and course materials generated by tutors and educational publishers. In this context, the course material may not be subject to division into a plurality of articles and instead may be treated as a single large article. The content of the article is then parsed to identify terms for which matches can be found in the relevant reference material/text books and cross-references and extended cross-references from the terms to the reference material/text book identified. Furthermore, where the course material is in electronic form, identification of the links can be inserted adjacent the relevant terms for which matches were found. In this way a collection of relevant reference resources can be used to provide extended cross-references within a collection of educational materials (e.g. textbooks or course modules).

Although in the embodiment described above the reference data is stored in the memory 12 of the remote data resource system, in an adaptation of the above embodiment the memory 12 of the remote data resource system may be limited to details of the individual headwords, their assigned extended cross-references and the addresses or locations where each of the headwords and each of the cross-references can be found. In this way the actual reference publications may be stored elsewhere and accessed, for example over the internet. In a further alternative, the memory 12 of the remote data resource system may only include the reference data for one or more reference publications or other databases whereas a list of the available headwords, their assigned extended cross-references and the addresses for each of the headwords and the cross-references is stored in the memory 12' of the client system. With the latter adaptation, the search engine is run on the client system to provide a list of headwords and their network addresses and a list of extended cross-references for each headword with the network addresses of each cross-reference so that any particular data reference is accessed over the network as desired.

Although the above is described in terms of a search engine that is suitable for use on the Web, the data cross-referencing method described herein has much broader applications and can be used to provide a powerful searching tool for any system that relies upon a plurality of disparate reference sources that are in some form or another cross-referenced. For example, the cross-referencing method is particularly suited to the management of internal company records and also to human resources management.

Further embodiments are envisaged for implementing the extended cross-referencing method described herein without departing from the scope of the invention as claimed.

## Claims

1. A cross-referencing method applied to a collection of separate reference sources including a first reference source containing cross-references for items in the first reference source wherein one or more existing cross-references for an item of the first reference source are identified and, based on the existing cross-references, a list of new cross-references for the item to one or more of the separate reference sources is generated that is characteristic of the collection of references sources.

2. A cross-referencing method as claimed in claim 1, comprising the steps of: identifying for each item in the first reference source elements associated with the item that are already cross-referenced; identifying items in the other reference sources of the collection corresponding to the identified cross-referenced elements; and generating new cross-references for the item in the first reference source to items identified in the other reference sources of the collection.

3. A cross-referencing method as claimed in claims 1 or 2, wherein the existing cross-references of each of the items of each of the reference sources are identified and new cross-references generated for all items.

4. A cross-referencing method as claimed in claim 3, wherein identical items in different reference sources are co-referenced.

5. A cross-referencing method as claimed in claim 4, wherein each one of the items in the reference sources is allocated a source tag indicative of the reference source and the contents of all of the reference sources is collated with all identical items having different source tags co-referenced.

6. A cross-referencing method as claimed in any one of the preceding claims, wherein the new cross-references are stored for future retrieval.

7. A cross-referencing method applied to a collection of separate reference sources including a first reference source containing a plurality of reference items wherein the content of a second reference source is analysed to identify appearances in the content of the second reference source of any one of the reference items of the first reference source and where one or more appearances are identified, a link between the appearance of the reference item in the second reference source and the reference item in the first reference source is recorded.

8. A cross-referencing method as claimed in claim 7, where said reference item appears in one or more further reference sources, a link between the appearance of the reference item in the second reference source and the reference item in the one or more further reference sources is recorded.

9. A reference method for locating information from a collection of reference sources, the method comprising the steps of addressing a database containing information from a plurality of reference sources; requesting a list of entries from the plurality of reference sources for an item; selecting one of the entries provided and for the selected entry retrieving a list of new cross-references generated by the method as claimed in claims 1 to 8.

10. A reference method as claimed in claim 9, further including the step of selecting one of the retrieved new cross-references as a new selected entry and retrieving a list of new cross-references generated by the method as claimed in claims 1 to 6 for the new selected entry.

11. A data carrier on which is recorded software for generating cross-references for a collection of reference sources wherein the software includes instructions to identify for an item of a first reference source one or more existing cross-references and to generate a list of new cross-references for the item to other reference sources that is characteristic of the collection of reference sources.

12. A data carrier as claimed in claim 11, wherein the software includes instructions to identify for each item in the first reference source elements associated with the item that are already cross-referenced; to identify items in the reference sources corresponding to the identified cross-referenced elements and to generate new cross-references for the item in the first reference source to items identified in the collection of reference sources.
